# EUROPÄISCHE PATENTSCHRIFT

(11) **EP 0 396 847 B1**
(45) Veröffentlichungstag und Bekanntmachung des Hinweises auf die Patenterteilung: **03.03.1993**
(21) Anmeldenummer: 89890140.0
(22) Anmeldetag: 10.05.1989
(51) Int. Cl.: A22C 17/00, A23B 4/14, A23B 4/02

(54) **Werkzeugkopf für eine Vorrichtung zum Injizieren von Behandlungsflüssigkeit in Fleisch**
Tool holder for an apparatus for injecting a treatment liquid into meat
Porte-outils pour appareil à injecter des fluides dans la viande

(43) Veröffentlichungstag der Anmeldung: 14.11.1990
(73) Patentinhaber: Inject Star Pökelmaschinen Gesellschaft m.b.H., A-1201 Wien (AT)
(72) Erfinder: Prosenbauer, Otto, A-1201 Wien (AT)
(74) Vertreter: Brauneiss, Leo, Dipl.Ing.

(56) Entgegenhaltungen:
- WO-A-83/02547
- WO-A-88/03758
- DE-A- 2 041 691
- FR-A- 2 274 227
- US-A- 2 796 017
- US-A- 3 530 785

## Beschreibung

Die Erfindung bezieht sich auf einen Werkzeugkopf (wie z.B. in WO-A-8803758) für eine Vorrichtung zum Injizieren von Behandlungsflüssigkeit in Fleisch, insbesondere von Pökellake, in welcher Vorrichtung der Werkzeugkopf relativ zu einer Auflage für das Fleisch auf und ab beweglich ist und an eine, insbesondere von einem Rohr gebildete, Zufuhrleitung für die Behandlungsflüssigkeit anschließbar ist, mit zumindest zwei vom gemeinsamen Werkzeugkopf an ihren Enden getragenen Injiziernadeln, deren jede einen mittigen Kanal für die Behandlungsflüssigkeit hat, die durch nahe der Spitze der Injiziernadel angeordnete Austrittsöffnungen in das Fleisch austritt, wobei im Werkzeugkopf ein Verteilerraum für die Behandlungsflüssigkeit vorgesehen ist, dem die Behandlungsflüssigkeit aus der für alle vom Werkzeugkopf getragenen Nadeln gemeinsamen Zufuhrleitung zuströmt und wobei der Verteilerraum mit den Kanälen der Injiziernadeln in Verbindung steht.

Derartige Werkzeugköpfe haben den Vorteil, daß mit der vergleichsweise hohen Zahl von ihnen getragener Injiziernadeln in intensives Pökeln des Fleisches erzielt wird, zumal eine Maschine zur Aufnahme derartiger Werkzeugköpfe in der Regel mit einer Vielzahl von in zumindest einer Reihe angeordneten Werkzeugköpfen versehen ist. Es ist auch bekannt, Werkzeugköpfe für eine solche Pökelmaschine mit zusätzlichen Werkzeugen, zumeist in Form von Messern zu versehen und die Werkzeugköpfe gegeneinander austauschbar auszubilden, sodaß die Maschine von einem Behandlungszweck auf einen anderen Behandlungszweck, insbesondere von Pökeln auf Tenderisieren umgerüstet werden kann.

Die Erfindung setzt sich zur Aufgabe, einen derartigen Werkzeugkopf mit geringem Aufwand noch weiter zu verbessern, insbesondere im Hinblick auf eine wirksame Dosierung der über die Injiziernadeln eingespritzten Behandlungsflüssigkeit im Sinne einer Steuerung der Lakezufuhr zu allen vom Werkzeugkopf getragenen Nadeln. Hiebei soll aber eine verläßliche Arbeitsweise gewährleistet sein. Die Erfindung löst diese Aufgabe dadurch, daß eine der Injiziernadeln im Werkzeugkopf in ihrer Längsrichtung verschiebbar gelagert ist, während die anderen Injiziernadeln am Werkzeugkopf starr befestigt sind, wobei diese Längsverschiebung in beiden Richtungen durch Anschläge zwischen zwei Grenzlagen begrenzt ist, daß der Mantel dieser längsverschiebbaren Injiziernadel durch zwei von ihrem mittigen Kanal ausgehende, voneinander in axialem Abstand liegende, zusätzlich zu den Austrittsöffnungen vorgesehene Öffnungen durchsetzt ist und daß in der einen Grenzlage dieser Injiziernadel die eine dieser Öffnungen mit der Zufuhrleitung in die Behandlungsflüssigkeit leitender Verbindung steht, die andere dieser Öffnungen mit dem Verteilerraum, wogegen in der anderen Grenzlage der längsverschiebbaren Injiziernadel zumindest eine dieser Öffnungen durch den Werkzeugkopf dichtend abgedeckt ist. Auf diese Weise ist es möglich, den Lakezustrom für alle vom selben Werkzeugkopf getragene Injiziernadeln erst dann freizugeben, wenn die verschiebbare Injiziernadel das Fleisch berührt hat. Der Auftreffwiderstand dieser Injiziernadel bzw. der vom Fleisch beim Eindringen der Nadel ausgeübte Widerstand verschiebt die Nadel relativ zum Werkzeugkopf entgegen der Einstechrichtung, so daß die Injiziernadel in jene Stellung relativ zum Werkzeugkopf verschoben wird, in welcher die Öffnungen freigegeben werden. Die Behandlungsflüssigkeit kann daher von der Zufuhrleitung durch die obere Öffnung des Injiziernadelmantels in deren mittigen Kanal eintreten und strömt einerseits in diesem entlang bis zur Spitze der längsverschiebbaren Injiziernadel, wo die Behandlungsflüssigkeit aus dieser Nadel austritt. Anderseits kann die Behandlungsflüssigkeit aber vom mittigen Kanal dieser Injiziernadel durch die untere der Öffnungen in den Verteilerraum eintreten und strömt von diesem in die mittigen Kanäle der anderen Injiziernadeln, so daß auch aus diesen Behandlungsflüssigkeit in das Fleisch eingespritzt wird. Im wesentlichen findet daher die Einspritzung der Behandlungsflüssigkeit während des Einstechvorganges der Nadeln statt, jedoch nicht schon früher, so daß vermieden wird, daß Behandlungsflüssigkeit aus den Injiziernadeln austritt, bevor diese noch in das Fleisch eingedrungen sind. Die unerwünschte, weil zumeist mit Schaum verbundene Überspülung des Fleisches mit von den Injiziernadeln unnütz verspritzter Behandlungsflüssigkeit sowie eine Verschmutzung der Maschine sowie deren Umgebung wird damit zumindest im wesentlichen vermieden.

Wird der Werkzeugkopf wieder zurückbewegt, so hat der Ausziehwiderstand der verschiebbaren Injiziernadel aus dem Fleisch zur Folge, daß die Nadel wieder zurück in die Ausgangslage relativ zum Werkzeugkopf verschoben wird, so daß ihr mittiger Kanal wieder abgeschlossen wird. Damit wird auch der Behandlungsflüssigkeitszustrom in den Verteilerraum unterbrochen, so daß auch aus den anderen Nadeln keine Lake mehr austritt. Wenn beim Zurückgehen der Nadeln noch etwas Behandlungsflüssigkeit aus diesen austritt, so befinden sich die Nadeln noch im Fleisch, so daß diese Behandlungsflüssigkeit nicht verlorengeht. Der im Verteilerraum dann entstehende Unterdruck verhindert ein Nachtropfen aus den Nadeln.

Selbst wenn die verschiebbare Nadel jedoch nicht durch den Ausziehwiderstand in ihre Schließlage bewegt wird, so wird diese Schließlage automatisch dadurch gesichert, daß über die Zufuhrleitung der Förderdruck der Behandlungsflüssigkeit auf das der Spitze abgewendete Ende der Nadel wirkt und diese dadurch in die Schließstellung des von ihren Öffnungen gebildeten Ventiles bewegt. Darin besteht ein wesentlicher Vorteil gegenüber bekannten Injiziernadelkonstruktionen, bei welchen die Rückführung eines längsverschiebbaren Injiziernadelteiles durch eine Rückstellfeder erfolgt, da eine solche Rückstellfeder stets die Gefahr eines Bruches mit sich bringt, zumal Pökellake oder ähnliche Behandlungsflüssigkeiten für Fleisch auf Federmaterialien stark korrodierend wirken.

Trifft die verschiebbare Injiziernadel bei der Abwärtsbewegung des die Werkzeugköpfe tragenden Stichrahmens od.dgl. nicht auf ein Fleischstück, so unterbleibt eine Verspritzung von Behandlungsflüssigkeit für den betreffenden Werkzeugkopf, unabhängig davon, welche Verhältnisse an den benachbarten Werkzeugköpfen vorliegen. Dadurch wird unregelmäßigen Fleischoberflächen, z.B. stark ballig geformten Fleischstücken, in völlig befriedigender Weise Rechnung getragen.

Die beiden Anschläge sichern, daß die Nadel nicht über die vorbestimmten Grenzlagen hinaus verschoben werden kann, so daß das Zusammenwirken ihrer Öffnungen mit den sie steuernden Oberflächenteilen des Werkzeugkopfes funktionsgesichert erhalten bleibt.

Jede der erwähnten Öffnungen muß nicht jeweils von einem einzigen, den Mantel der Injiziernadel durchsetzenden Loch gebildet sein, vielmehr ist der Begriff "Öffnung" auch so zu verstehen, daß auf gleicher Höhe der Injiziernadel zwei oder mehr nach verschiedenen Richtungen weisende Durchbrechungen dieses Mantels vorgesehen sind, die jedoch im oben erwähnten Sinn gleichsinnig und zumindest im wesentlichen gleichzeitig gesteuert werden.

Gemäß einer Weiterbildung der Erfindung sind die beiden Anschläge auf der verschiebbaren Nadel befestigt, z.B. in Form von aufgeschraubten Muttern oder aufgepreßten Hülsen. Mit diesen handelsüblichen Bauteilen läßt sich die ansonsten rohrförmige Nadel mit geringen Kosten im Sinne der Erfindung ausbilden. Um störende Geräusche zu vermeiden, ist es gemäß einer Weiterbildung der Erfindung zweckmäßig, wenn an den beiden Anschlägen Ringe aus elastischem Material anliegen, das in Bezug auf die Behandlungsflüssigkeit beständig ist. Diese Ringe besorgen auch die nötige Abdichtung. Geeignete Materialien sind z.B. lakebeständiger Gummi oder Kunststoff.

Die längsverschiebbare Nadel übt - wie aus Vorstehendem hervorgehteine Steuerwirkung auf den Lakezustrom zu den anderen Nadeln aus. Hiefür ist es im Rahmen der Erfindung besonders günstig, wenn die längsverschiebbare Injiziernadel in ihrer den Behandlungsflüssigkeitsstrom absperrenden Stellung in Einstechrichtung über die anderen, am Werkzeugkopf starr befestigten Nadeln vorsteht, wodurch der erwähnten Fühlerfunktion der längsverschiebbaren Injiziernadel am besten Rechnung getragen wird.

Um den Werkzeugkopf und die von ihm getragenen Werkzeuge, insbesondere die mittigen Kanäle der Injiziernadeln, leicht reinigen zu können, ist gemäß einer bevorzugten Variante der Erfindung die Anordnung so getroffen, daß der Verteilerraum von zwei miteinander über ein Gewinde verbundenen Bauteilen, z.B. einer mit einem Grundkörper verschraubten Hülse, des Werkzeugkopfes begrenzt ist, deren einer an seinem Boden die weiteren Injiziernadeln bzw. die Messer trägt, wobei die längsverschiebbare Injiziernadel diesen Boden gleitend durchsetzt und an ihrem ihrer Spitze abgewendeten Ende eine abschraubbare, einen der Anschläge bildende Mutter trägt, nach deren Abschrauben die Injiziernadel aus dem Werkzeugkopf herausziehbar ist. Die einzelnen Bauteile können dann leicht gereinigt werden.

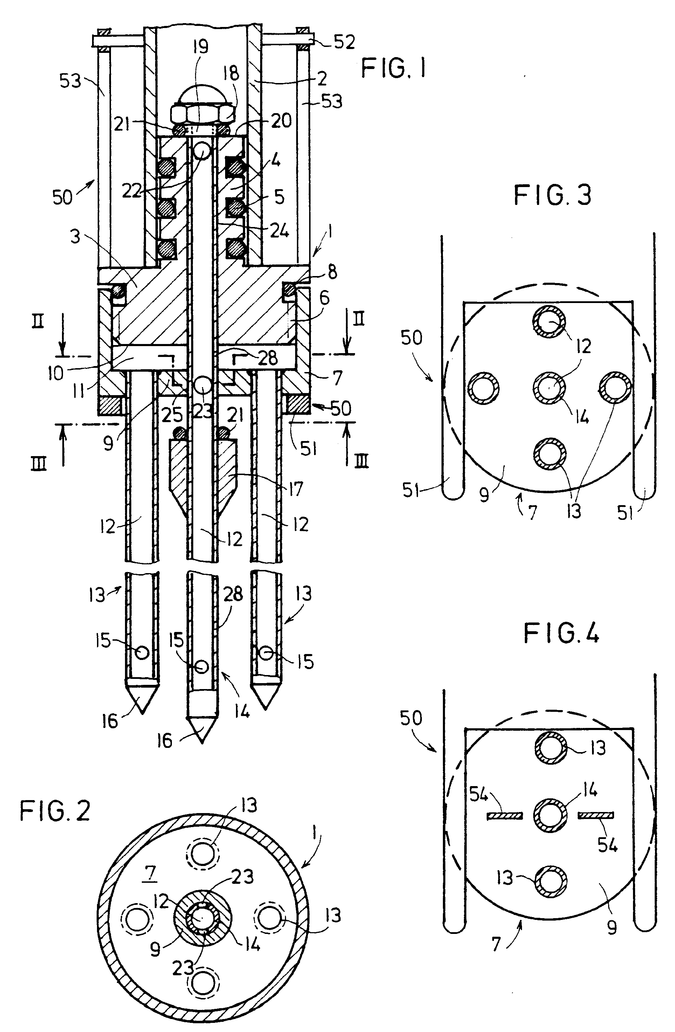

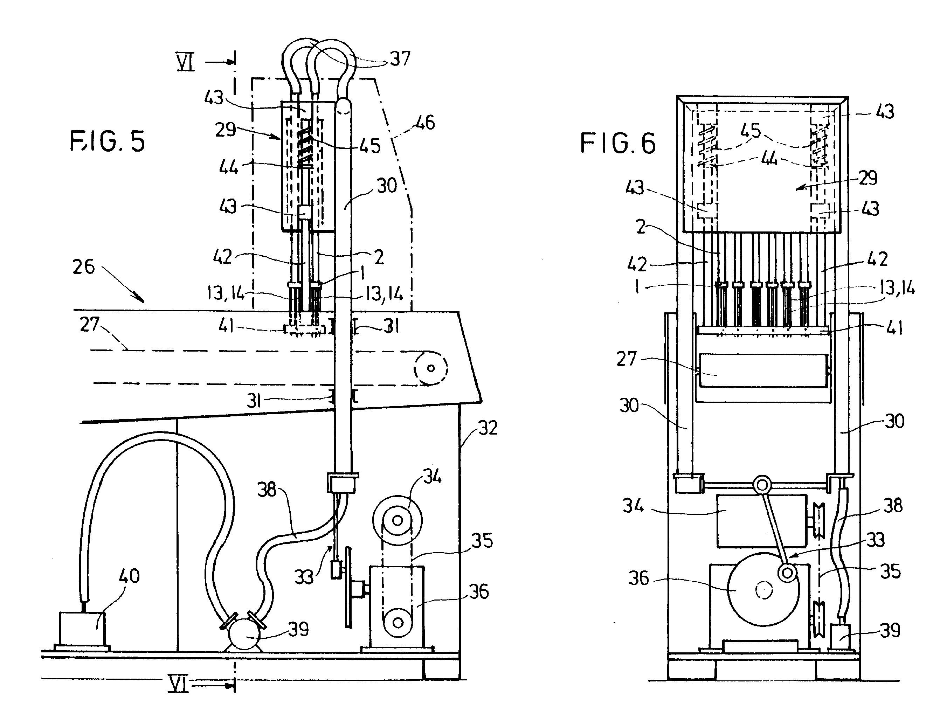

In der Zeichnung sind Ausführungsbeispiele des Erfindungsgegenstandes schematisch dargestellt. Fig.1 zeigt eine Ausführungsform eines erfindungsgemäßen Werkzeugkopfes im Vertikalschnitt. Die Fig.2 und 3 sind Schnitte nach den Linien II-II bzw. III-III der Fig.1. Fig.4 zeigt eine Ausführungsvariante des Werkzeugkopfes im Schnitt ähnlich Fig.3. Fig.5 zeigt eine mit Werkzeugköpfen versehene Pökelmaschine in Seitenansicht. Fig.6 ist ein Schnitt nach der Linie VI-VI der Fig.5.

Der Werkzeugkopf 1 nach den Fig.1 bis 3 ist an eine von einem Rohr gebildete Zufuhrleitung 2 für in das Fleisch auf einer Pökelmaschine einzuspritzende Pökellake dicht anschließbar. Hiezu hat der Werkzeugkopf 1 einen Grundkörper 3, der einstückig mit einem Steckzapfen 4 ausgebildet ist, der in die Zufuhrleitung 2 dichtend einsteckbar ist. Die Dichtwirkung wird durch O-Ringe 5 unterstützt, die in Ringnuten des Grundkörpers 3 eingelegt sind. Mit dem Grundkörper 3 ist über ein Gewinde 6 eine Hülse 7 verbunden. Ein O-Ring 8 sichert die Dichtheit dieser Gewindeverbindung. In der auf den Grundkörper 3 aufgeschraubten Stellung der Hülse 7 liegt zwischen dem Boden 9 der Hülse 7 und der unteren Stirnfläche 10 des Grundkörpers 3 ein Verteilerraum 11 für die Pökellake an den die mittigen Kanäle 12 von vier Injiziernadeln 13 angeschlossen sind, die in Bohrungen des Bodens 9 der Hülse 7 eingesetzt und dort festgeschweißt sind. Diese Injiziernadeln 13 sind in gleichen Abständen voneinander im Kreis um ein gemeinsames Zentrum angeordnet (Fig.2), welches Zentrum zweckmäßig mit der Längsachse der Zufuhrleitung 2 zusammenfällt. Konzentrisch mit dieser Längsachse ist eine weitere Injiziernadel 14 angeordnet, die längsverschiebbar im Grundkörper 3 sowie im Boden 9 der Hülse 7 gleitend gelagert ist, und ebenfalls einen mittigen Kanal 12 für die einzuspritzende Lake aufweist. Aus diesem Kanal 12 jeder Injiziernadel 13,14 tritt die Lake durch zumindest eine radiale Öffnung 15 aus, die zweckmäßig nahe der Spitze 16 der betreffenden Nadel angeordnet ist.

Die Längsverschiebung der mittig angeordneten Injiziernadel 14 ist durch Anschläge 17,18 begrenzt, die auf dem die Injiziernadel 14 bildenden Rohr unverschiebbar befestigt sind. Der Anschlag 17 ist hiebei eine am Rohr der Nadel 14 festgeschweißte Hülse, der Anschlag 18 eine auf ein Gewinde 19 des oberen Endes der Nadel 14 aufgeschraubte Mutter. Die beiden Anschläge 17,18 wirken mit dem Boden 9 der Hülse 7 bzw. mit der oberen Stirnfläche 20 des Grundkörpers 3 zusammen. Um störende Geräusche zu vermeiden und die Abdichtung zu verbessern, sind an den Anschlägen 17,18 O-Ringe 21 aus elastischem Material befestigt, welche die Schlaggeräusche beim Wirksamwerden der Anschläge dämpfen. Zusätzlich zu den Öffnungen 15 hat die mittlere, verschiebbare Injiziernadel 14 noch weitere Öffnungen 22,23, die vom mittleren Kanal 12 der Nadel ausgehend deren Mantel 28 durchsetzen. Die obere dieser Öffnungen 22 ist von einem radialen Bohrungspaar gebildet, das nahe dem Anschlag 18 derart angeordnet ist, daß in der oberen Grenzlage der Injiziernadel 14 diese Öffnung 22 in Verbindung mit dem Innenraum der Zufuhrleitung 2 steht, so daß Lake aus der Zufuhrleitung 2 in den Kanal 12 der Injiziernadel 14 einströmen kann. In der gleichen Stellung der Injiziernadel 14 steht die andere Öffnung 23, die ebenfalls von einem radialen Bohrungspaar gebildet ist (Fig.2), mit dem Verteilerraum 11 in Verbindung. In der anderen Grenzlage der Injiziernadel 14 jedoch sind beide Öffnungen 22, 23 durch den Werkzeugkopf 1 für die Lake dicht abgeschlossen, und zwar die Öffnung 22 durch die Wand der mittigen Bohrung 24, in welcher das Rohr der Injiziernadel 14 im Grundkörper 3 geführt ist, die Öffnung 23 hingegen durch die Wand einer mit der Bohrung 24 fluchtenden Bohrung 25 des Bodens 9 der Hülse 7. Auf diese Weise wird eine Steuerung des Lakezustromes zu den Injiziernadeln 13,14 auf die folgende Weise erreicht: Solange die Nadeln nicht in das Fleisch eingestochen sind, ist der Lakezustrom zu den Nadeln gesperrt, da der in der Zufuhrleitung 2 herrschende Lakedruck auf den breiten Anschlag 18 wirkt und dadurch die mittlere verschiebbare Injiziernadel 14 in die Schließstellung schiebt, in welcher die von den Öffnungen 22, 23 gebildeten Ventile geschlossen sind. Gelangen die Nadeln 13,14, die mit ihrem Werkzeugkopf 1 an einem Stichrahmen einer Pökelmaschine befestigt sind (siehe Fig.5, 6), zum Auftreffen auf das Fleisch bzw. zum Eindringen in dasselbe während der Abwärtsbewegung des Stichrahmens, so wird die bewegliche Injiziernadel 14 durch den Eindringwiderstand relativ zum Werkzeugkopf 1 soweit nach oben (in Bezug auf die in Fig.1 dargestellte Ausgangslage ohne Überwindung der Gegenkraft einer Feder verschoben, bis der Anschlag 17 am Boden 9 anliegt. In dieser zweiten Grenzlage der Nadel 14 steht die Öffnung 22 mit der Zufuhrleitung 2 in Verbindung und die Öffnung 23 mit dem Verteilerraum 11. Die Lake kann daher aus der Zufuhrleitung 2 durch die Öffnung 22 in den mittleren Kanal 12 der verschiebbaren Injiziernadel 14 eintreten und in dieser zu ihrer Austrittsöffnung 15 strömen. Zugleich strömt aber Lake aus dem Kanal 12 der mittleren Nadel 14 durch die Öffnung 23 hindurch in den Verteilerraum 11 und tritt aus diesem in die mittleren Kanäle 12 der anderen, unbeweglich am Werkzeugkopf 1 befestigten Injiziernadeln 13 ein. Aus den Öffnungen 15 aller Injiziernadeln 13,14 wird dann Lake in das Fleisch eingespritzt. Dies währt so lange, bis der Stichrahmen nach oben bewegt wird, wodurch die Nadeln 13,14 aus dem Fleisch herausgezogen werden. Der Auszugswiderstand für die mittlere Nadel bewirkt, daß diese zurückgehalten wird und sich dadurch, ohne daß eine Rückführfeder nötig ist, relativ zum Werkzeugkopf 1 wieder in die in Fig.1 dargestellte Ausgangslage zurückbewegt. Dadurch werden die Öffnungen 22,23 wieder geschlossen und der Lakezustrom zu den Austrittsöffnungen 15 der Nadeln 13,14 hört auf.

Um die beschriebene Fühlerwirkung der mittleren Injiziernadel 14 besser zur Geltung zu bringen, steht diese Nadel 14 mit ihrer Spitze 16 über die Spitzen 16 der anderen Injiziernadeln 13 in der zuletzt beschriebenen Abschlußstellung (Fig. 1) vor.

Um zu verhindern, daß der in die Zufuhrleitung 2 mit seinem Steckzapfen 4 eingesteckte Werkzeugkopf 1 durch den in der Zufuhrleitung 2 herrschenden Lakedruck aus dieser herausgedrückt wird, ist eine Halterung 50 (Fig.1,3) vorgesehen, die den Boden 9 der Hülse 7 untergreift und an der Zufuhrleitung 2 oder einem sie tragenden Bauteil lösbar oder ausschwenkbar befestigt ist. Diese Halterung 50 kann z.B. von einem Schwenkbügel 53 gebildet sein, der um eine horizontale, an der Zufuhrleitung 2 befestigte Achse 52 schwenkbar ist und für jede Hülse 7 zwei seitliche Finger 51 hat, welche die Hülse 7 halten. Bei Zurückschwenkung dieses Bügels 53 gleiten die Finger 51 der Halterung 50 vom Boden 9 ab, so daß der Werkzeugkopf 1 samt den von ihm getragenen Werkzeugen von der Zufuhrleitung 2 abgezogen werden kann. Die Halterung kann jedoch auch von einer Platte gebildet sein, die für alle Nadeln oder eine Gruppe von Nadeln gemeinsam wirksam sein kann. Diese Platte kann mit Stangen parallel zur Nadelachse verschiebbar geführt sein, so daß bei Absenkung der Platte die Werkzeugköpfe 1 samt denen von ihnen getragenen Werkzeugen ausgebaut werden können. In der wirksamen Stellung der Platte ist diese in Anlage an den Boden 9 der von ihr gehaltenen Werkzeugköpfe 1 durch einen Spanner gehalten, der an einem die Zufuhrleitung 2 tragenden Bauteil, z.B. an einem Nadelkasten 29 (Fig.5,6) lösbar befestigt ist.

Zwecks leichterer Reinigung ist der Werkzeugkopf 1 zerlegbar. Hiezu braucht lediglich nach Abziehen des Werkzeugkopfes 1 die den Anschlag 18 bildende Mutter von der Injiziernadel 14 abgeschraubt zu werden, worauf diese Nadel 14 aus dem Grundkörper 3 herausgezogen werden kann. Durch Abschraubung der Hülse 7 vom Grundkörper 3 ist auch der Verteilerraum 11 für die Reinigung zugänglich.

Die Ausführungsform nach Fig.4 unterscheidet sich von jener nach den Fig.1 bis 3 lediglich dadurch, daß die vom Werkzeugkopf 1 getragenen Werkzeuge nicht durchwegs von Injiziernadeln 13,14 gebildet sind, sondern daß zusätzlich zur mittigen, verschiebbaren Injiziernadel 14 und zwei zu deren beiden Seiten angeordneten, unverschiebbaren Injiziernadeln 13 zwei weitere Werkzeuge in Form von Messern 54 zu beiden Seiten der mittleren Injiziernadel 14 angeordnet sind. Diese Messer 54 können in der Weise üblicher Steakermesser ausgebildet sein oder nach Art der Messer von Tenderizern.

Selbstverständlich sind auch jedwede andere Kombinationen von Werkzeugen, insbesondere von Nadeln und Messern, möglich, da ja die Werkzeugköpfe 1 aller Werkzeugkombinationen einander identisch ausgebildet sind, so daß eine problemlose Umrüstung der Maschine auf jedwede Werkzeugart bzw. Kombination von Werkzeugen möglich ist. Hat jeder Werkzeugkopf 1 nur eine einzige Injiziernadel, so ist diese auf die beschriebene Weise beweglich und steuert ihren Lakestrom selbst. Sind zumindest zwei Injiziernadeln vom selben Werkzeugkopf 1 getragen, so wird die Steuerbewegung der beweglichen Injiziernadeln 14 für die Steuerung des Lakezustromes zur anderen, starr montierten Injiziernadel sinnvoll genützt.

Eine mit erfindungsgemäßen Werkzeugköpfen 1 bestückbare Pökelmaschine 26 ist in den Fig.5 und 6 dargestellt. Das zu pökelnde Fleisch wird auf einer als Förderband ausgebildeten Auflagefläche 27 unter den Nadeln 13,14 der Werkzeugköpfe 1 hindurchgeführt. Die Werkzeugköpfe 1 sind mit ihren rohrförmigen Zufuhrleitungen 2 an einem Nadelkasten 29 gehaltert, der gegen die Auflagefläche 27 verschiebbar angeordnet und an einem von Rohren gebildeten Stichrahmen 30 befestigt ist, der in Gleitlagern 31 des Maschinengestelles 32 auf und ab verschiebbar gelagert ist. Der Antrieb des Stichrahmens 30 zu dieser Bewegung erfolgt von einem Motor 34 aus über einen Riemen 35, ein Getriebe 36 und einen Kurbeltrieb 33. Zur Versorgung mit Lake sind die Zufuhrleitungen 2 mit Schläuchen 37 an die Rohre des Stichrahmens 30 angeschlossen, der unten an einen Schlauch 38 angeschlossen ist, dem die Lake von einer Pumpe 39 zugeführt wird, welche die Lake von einer Lakequelle 40 aus ansaugt.

Um zu vermeiden, daß die von den Werkzeugköpfen 1 getragenen Werkzeuge beim Auftreffen auf einen im Fleisch befindlichen Knochen beschädigt werden, sind die Zufuhrleitungen 2 im Nadelkasten 29 entgegen der Wirkung nicht dargestellter Federn nachgiebig gelagert. Die Zufuhrleitungen 2 können auch verschwenkbar im Nadelkasten 29 gehaltert sein.

Ferner ist ein Abstreifer 41 vorgesehen, der an zwei Stangen 42 aufgehängt ist, die in am Nadelkasten 29 befestigten Gleitlagern 43 längsverschiebbar geführt sind. Jede Stange 42 trägt einen an ihr verstellbar festgelegten Ring 44, der das eine Widerlager einer Feder 45 bildet, deren anderes Ende gegen das jeweils obere Gleitlager 43 abgestützt ist. Bei der Abwärtsbewegung des Nadelkastens 29 wird der Abstreifer 41 so lange mitgeführt, bis er auf dem zu behandelnden Gut zur Auflage kommt, worauf der Nadelkasten 29 mit den Werkzeugen weiter abgesenkt wird, der Abstreifer 41 hingegen in seiner Lage verbleibt, wobei die Federn 45 gespannt werden. Geht der Nadelkasten 29 wieder hoch, so entspannen sich die Federn 45 wieder und der Abstreifer 41 wird vom Fleisch abgehoben, sobald das jeweils untere Gleitlager 43 am Ring 44 zur Anlage kommt.

Zweckmäßig bewegt sich eine die Auflagefläche 27 bildende Transporteinrichtung, z.B. ein Förderband oder ein Transportkamm, schrittweise, um das zu pökelnde Gut im Ruhezustand bearbeiten zu können. Die hiezu verwendeten, in Reihen quer zur Bewegungsrichtung des Fleisches angeordneten Werkzeugköpfe 1 sind hiebei durchwegs hinsichtlich ihres Anschlusses an die Zufuhrleitungen 2 einander identisch ausgebildet, so daß die Werkzeugköpfe 1 samt den von ihnen getragenen Werkzeugen problemlos gegeneinander ausgetauscht werden können. Eine Umrüstung der Maschine auf einen anderen Verwendungszweck ist daher leicht möglich.

Der Nadelkasten 29 und der obere Teil des Stichrahmens 30 können von einem Gehäuse 46 (Fig. 5) umschlossen sein, um Verunreinigungen der Umgebung durch spritzende Lake zu vermeiden.

## Patentansprüche

1. Werkzeugkopf für eine Vorrichtung zum Injizieren von Behandlungsflüssigkeit in Fleisch, insbesondere von Pökellake, in welcher Vorrichtung der Werkzeugkopf (1) relativ zu einer Auflage (27) für das Fleisch auf und ab beweglich ist und an eine, insbesondere von einem Rohr gebildete, Zufuhrleitung (2) für die Behandlungsflüssigkeit anschließbar ist, mit zumindest zwei vom gemeinsamen Werkzeugkopf (1) an ihren Enden getragenen Injiziernadeln (13,14), deren jede einen mittigen Kanal (12) für die Behandlungsflüssigkeit hat, die durch nahe der Spitze (16) der Injiziernadel (13,14) angeordnete Austrittsöffnungen (15) in das Fleisch austritt, wobei im Werkzeugkopf (1) ein Verteilerraum (11) für die Behandlungsflüssigkeit vorgesehen ist, dem die Behandlungsflüssigkeit aus der für alle vom Werkzeugkopf (1) getragenen Nadeln (13,14) gemeinsamen Zufuhrleitung (2) zuströmt und wobei der Verteilerraum (11) mit den Kanälen (12) der Injiziernadeln (13,14) in Verbindung steht, dadurch gekennzeichnet, daß eine der Injiziernadeln (14) im Werkzeugkopf (1) in ihrer Längsrichtung verschiebbar gelagert ist, während die anderen Injiziernadeln (13) am Werkzeugkopf (1) starr befestigt sind, wobei diese Längsverschiebung in beiden Richtungen durch Anschläge (17,18) zwischen zwei Grenzlagen begrenzt ist, daß der Mantel dieser längsverschiebbaren Injiziernadeln (14) durch zwei von ihrem mittigen Kanal (12) ausgehende, voneinander in axialem Abstand liegende, zusätzlich zu den Austrittsöffnungen (15) vorgesehene Öffnungen (22,23) durchsetzt ist, und daß in der einen Grenzlage dieser Injiziernadel (14) die eine dieser Öffnungen (22) mit der Zufuhrleitung (2) in, die Behandlungsflüssigkeit leitender, Verbindung steht, die andere (23) dieser Öffnungen mit dem Verteilerraum (11), wogegen in der anderen Grenzlage der längsverschiebbaren Injiziernadel (14) zumindest eine dieser Öffnungen (22,23) durch den Werkzeugkopf (1) dichtend abgedeckt ist.

2. Werkzeugkopf nach Anspruch 1, dadurch gekennzeichnet, daß die beiden Anschläge (17,18) auf der verschiebbaren Nadel (14) befestigt sind, z.B. in Form von aufgeschraubten Muttern oder aufgepreßten Hülsen.

3. Werkzeugkopf nach Anspruch 1 oder 2, dadurch gekennzeichnet, daß an den beiden Anschlägen (17,18) Ringe (21) aus elastischem Material anliegen, das in Bezug auf die Behandlungsflüssigkeit beständig ist.

4. Werkzeugkopf nach einem der Ansprüche 1 bis 3, dadurch gekennzeichnet, daß die längsverschiebbare Injiziernadel (14) in ihrer den Behandlungsflüssigkeitsstrom absperrenden Stellung in Einstechrichtung über die anderen, am Werkzeugkopf starr befestigten Injiziernadeln (13) vorsteht.

5. Werkzeugkopf nach einem der Ansprüche 1 bis 4, dadurch gekennzeichnet, daß der Verteilerraum (11) von zwei miteinander über ein Gewicht (6) verbundenen Bauteilen, z.B. einer mit einem Grundkörper (3) verschraubten Hülse (7), des Werkzeugkopfes (1) begrenzt ist, deren einer an seinem Boden (9) die weiteren Injiziernadeln (12) trägt, wobei die längsverschiebbare Injiziernadel (14) diesen Boden (9) gleitend durchsetzt und an ihrem ihrer Spitze (16) abgewandten Ende eine abschraubbare, einen der Anschläge (17,18) bildende Mutter trägt, nach deren Abschrauben diese Injiziernadel (14) aus dem Werkzeugkopf (1) herausziehbar ist.

6. Werkzeugkopf nach einem der Ansprüche 1 bis 5, dadurch gekennzeichnet daß er zusätzlich zu den Injiziernadeln (13,14) noch weitere Werkzeuge, insbesondere zumindest ein Messer (54) trägt.

## Claims

1. A tool head for a device for injecting treatment fluid into meat, in particular brine, in which device the tool head (1) is movable up and down relative to a support (27) for the meat and can be connected to a supply line (2) ― in particular formed by a pipe ― for the treatment fluid, the device having at least two injecting needles (13, 14) which are borne at their ends by the common tool head (1) and which each have a central channel (12) for the treatment fluid issuing into the meat through outlet openings (15) arranged close to the tip (16) of the injecting needle (13, 14), the tool head (1) being provided with a distribution chamber (11) for the treatment fluid toward which the latter flows from the supply line (2) common to all needles (13, 14) borne by the tool head (1), and the distribution chamber (11) communicating with the channels (12) of the injecting needles (13, 14), characterized in that one of the injecting needles (14) is mounted in the tool head (1) so as to be displaceable longitudinally, while the other injecting needles (13) are fixedly fastened to the tool head (1), stops (17, 18) limiting this longitudinal displacement in both directions between two limit positions, in that the wall of these longitudinally-displaceable injecting needles (14) is pierced by two openings (22, 23) which issue from the central channel (12) of the injecting needle (14), are at a distance from one another axially and are provided in addition to the outlet openings (15), and in that in one limit position of this injecting needle (14) one of these openings (22) communicates with the supply line (2) so as to convey the treatment fluid, the other opening (23) communicating with the distribution chamber (11), whereas in the other limit position of the longitudinally-displaceable injecting needle (14) at least one of these openings (22, 23) is covered in a sealed manner by the tool head (1).

2. A tool head in accordance with Claim 1, characterized in that the two stops (17, 18) are fastened on the displaceable needle (14), e.g. in the form of screwed-on nuts or forced-on sleeves.

3. A tool head in accordance with Claim 1 or 2, characterized in that contacting with the two stops (17, 18) there are rings (21) of a resilient material resistant to the treatment fluid.

4. A tool head in accordance with any one of Claims 1 to 3, characterized in that in its position blocking the treatment fluid stream, the longitudinally-displaceable injecting needle (14) protrudes ― in the sticking direction ― beyond the other injecting needles (13) fixedly fastened to the tool head.

5. A tool head in accordance with any one of Claims 1 to 4, characterized in that the distribution chamber (11) is defined by two component parts of the tool head (1), e.g. a sleeve (7) screwed to a basic body (3), which are connected to one another via a weight [sic] (6), one of the component parts bearing the additional injecting needles (12) [sic] on its base (9), the longitudinally-displaceable injecting needle (14) sliding through this base (9) and on its end facing away from its tip (16) bearing an unscrewable nut which forms one of the stops (17, 18), this injecting needle (14) being removable from the tool head (1) after unscrewing of the nut.

6. A tool head in accordance with any one of Claims 1 to 5, characterized in that in addition to the injecting needles (13, 14) it has still more tools, in particular at least one knife (54).

## Revendications

1. Porte-outil pour appareil à injecter un liquide de traitement dans de la viande, en particulier de la saumure, appareil dans lequel le porte-outil (1) est déplaçable, en montée et en descente, par rapport à une embase (27) destinée à la viande et susceptible d'être raccordé à une conduite d'amenée (2), formée en particulier par un tube, pour le liquide de traitement, avec au moins deux aiguilles d'injection (13,14), portées à leurs extrémités par un porte-outil (1) commun, dont chacune comporte un canal central (12) pour le liquide de traitement, qui sort dans la viande, à travers des ouvertures de sortie (15), disposée près de la pointe (18) des aiguilles d'injection (13,14), une enceinte de répartition (11) destinée au liquide de traitement étant prévue dans le porte-outil (1), enceinte de répartition à laquelle arrive le liquide de traitement provenant de la conduite d'amenée (2) commune à toutes les aiguilles (13,14) portées par le porte-outil (1) et qui est reliée aux canaux (12) des aiguilles d'injection (13,14), caractérisé en ce que l'une des aiguilles d'injection (14) est montée dans le porte-outil (1) en étant coulissante dans sa direction longitudinale, tandis que les autres aiguilles d'injection (13) sont fixées rigidement sur le porte-outil (1), ce déplacement longitudinal dans les deux directions étant limité entre deux positions limites au moyen de butées (17,16), en ce que l'enveloppe de cette aiguille d'injection (14) déplaçable longitudinalement est traversée par deux orifices (22,23) partant de son canal central (12), espacés l'un de l'autre axialement, prévus en plus des ouvertures de sortie (15), et en ce que dans une position limite de cette aiguille d'injection (14), l'une de ces ouvertures (22) est reliée à la conduite d'amenée (2) de manière à transmettre le liquide de traitement, l'autre (23) de ces ouvertures (23) étant reliée à l'enceinte de répartition (11), alors que, par contre, dans l'autre position limite de l'aiguille d'injection (14) déplaçable longitudinalement, au moins l'une de ces ouvertures (22,23) est recouverte de façon étanche par le porte-outil (1).

2. Porte-outil selon la revendication 1, caractérisé en ce que les deux butées (17,18) sont fixées sur l'aiguille déplaçables (14), par exemple sous forme d'écrous vissés ou de douilles pressées.

3. Porte-outil selon la revendication 1 ou 2, caractérisé en ce que des bagues (21) en matériau élastique, résistant par rapport au liquide de traitement, sont appuyées sur les deux butées (17,18).

4. Porte-outil selon l'une des revendications 1 à 3, caractérisé en ce que, dans sa position obstruant le courant de liquide de traitement, l'aiguille d'injection (14) déplaçable longitudinalement fait saillie, dans le sens du piquage, au-dessus des autres aiguilles d'injection (13) fixées rigidement sur le porte-outil.

5. Porte-outil selon l'une des revendications 1 à 4, caractérisé en ce que l'enceinte de répartition (11) est limitée par deux éléments de construction du porte-outil (1), reliés ensemble par l'intermédiaire d'un poids (6), par exemple une douille (7) vissée à un corps de base (3), dont l'un porte, sur son fond (6) les autres aiguilles d'injection (12), l'aiguille d'injection (14) déplaçable longitudinalement traversant ce fond (9) de façon coulissante et portant à l'extrémité opposée à sa pointe (16) un écrou vissable, formant l'une des butées (17,18), après le dévissage de laquelle cette aiguille d'injection (14) peut être extraite du porte-outil (1).

6. Porte-outil selon l'une des revendications 1 à 5, caractérisé en ce qu'il porte en plus des aiguilles d'injection (13,14) encore d'autres outils, en particulier au moins une lame (54).
